(19) 

**Europäisches Patentamt**
**European Patent Office**
**Office européen des brevets**

(11) **EP 4 682 010 A1**

(12) **EUROPEAN PATENT APPLICATION**
published in accordance with Art. 153(4) EPC

(43) Date of publication:
**21.01.2026 Bulletin 2026/04**

(21) Application number: **23955896.8**

(22) Date of filing: **22.11.2023**

(51) International Patent Classification (IPC):
**B61C 15/14** (2006.01)

(86) International application number:
**PCT/CN2023/133342**

(87) International publication number:
**WO 2025/081578 (24.04.2025 Gazette 2025/17)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority: **20.10.2023 CN 202311371483**

(71) Applicant: **CRRC Changchun Railway Vehicles Co., Ltd.**
**Changchun, Jilin 130000 (CN)**

(72) Inventors:
• **LI, Xuefei**
  **Changchun, Jilin 130000 (CN)**
• **ZHANG, Yuguang**
  **Changchun, Jilin 130000 (CN)**
• **ZHAO, Hongtao**
  **Changchun, Jilin 130000 (CN)**
• **SUN, Wenbin**
  **Changchun, Jilin 130000 (CN)**

(74) Representative: **v. Bezold & Partner**
**Patentanwälte - PartG mbB**
**Ridlerstraße 57**
**80339 München (DE)**

(54) **TRAIN VARIABLE MOTOR-TO-TRAILER RATIO CONTROL METHOD, CONTROLLER AND TRAIN**

(57) Provided are a train variable motor-to-trailer ratio control method, a controller and a train, relating to the technical field of rail transit. The method comprises: on the basis of acquired train operation line information, location information, passenger capacity, rail surface state and weather state, calculating a first traction force required for the train operation; non-uniformly distributing the first traction force to traction units; monitoring the accumulated working time of each traction unit that is providing a traction force; and once the accumulated working time is greater than a set first duration threshold, disabling the corresponding traction unit, and switching to another traction unit that is not providing a traction force. The traction force is distributed nonuniformly, and the traction units of different carriages are rotated according to the accumulated working time, so as to control a variable motor-to-trailer ratio. An adaptive traction force can be provided on the basis of actual traction force requirements, thereby reducing the loss of a traction system itself and auxiliary energy consumption, achieving energy saving of the system.

acquiring operation information of train, calculating first traction force required for train operation according to operation information — S01

distributing first traction force unevenly to each traction unit, wherein at least one traction unit does not provide traction force — S02

acquiring accumulated working duration of each traction unit currently providing traction force — S03

whether working duration is greater than first duration threshold — S04 — No

shutting down traction, resetting working duration of traction unit to zero, and starting another traction unit not currently providing traction force — S05 — Yes

acquiring operation information of train in real time, calculating second traction force required for train operation according to operation information — S06

whether absolute value of difference between second traction force and first traction force exceeds second error threshold — S07 — No — Yes → replacing first traction force with second traction force

**FIG. 2**

## Description

### CROSS-REFERENCE TO RELATED APPLICATIONS

The present disclosure claims the priority to the Chinese patent application No. 202311371483.1, filed with the Chinese patent office on October 20, 2023, and entitled "TRAIN VARIABLE MOTOR-TO-TRAILER RATIO CONTROL METHOD, CONTROLLER AND TRAIN", the contents of which are incorporated herein by reference in entirety.

### TECHNICAL FIELD

The present disclosure relates to the technical field of rail transit, and particularly relates to a control method, a controller, and a train with a variable motor-to-trailer ratio (i.e., a train variable motor-to-trailer ratio control method, a controller, and a train).

### BACKGROUND ART

At present, rail transit trains such as high-speed multiple units, intercity multiple units, urban trains, and subway trains generally adopt a fixed motor-to-trailer ratio, that is, the motor-to-trailer ratio is the same during a passenger flow peak period and during a passenger flow low period. During the passenger flow peak period, there are more passengers and the load is larger, and during the passenger flow low period, the passenger flow is low and the load is smaller. If the motor-to-trailer ratio during the passenger flow low period is still the same as that during the passenger flow peak period, the same consumption is caused, resulting in a waste of electric energy. During the train operation process, the traction power required under most working conditions is relatively small. In trains with a fixed motor-to-trailer ratio, system loss and auxiliary loss are relatively large, which is not conducive to realizing energy saving of the system. In addition, the required configuration of motor-to-trailer ratio is different according to the line of train operation or the actual operation condition. For example, when an urban train operates on a subway line, the station interval distance is short, a higher acceleration is required, and a higher configuration of motor-to-trailer ratio is required. When operating on an intercity railway, the station interval distance is long, a higher speed is required, and a lower motor-to-trailer ratio can be configured to meet the train operation requirement. A fixed motor-to-trailer ratio cannot exert the advantages of the urban train.

### SUMMARY

In view of this, an object of the present disclosure is to provide a control method, a controller, and a train with a variable motor-to-trailer ratio.

In a first aspect, an embodiment of the present disclosure provides a control method for the train with the variable motor-to-trailer ratio, including steps of: acquiring operation information of a train, wherein the operation information includes line information, position information, passenger load, rail surface state, and weather state; calculating a first traction force required for train operation according to the operation information; distributing the first traction force unevenly to each traction unit, wherein at least one traction unit does not provide the traction force; acquiring an accumulated working duration of each traction unit currently providing the traction force; comparing the accumulated working duration of each traction unit currently providing the traction force with a first duration threshold; shutting down the traction unit in response to the accumulated working duration of the traction unit currently providing the traction force being greater than the first duration threshold; resetting the accumulated working duration of the traction unit to zero; and starting another traction unit not currently providing the traction force.

In some embodiments, the method further includes steps of: calculating a target braking force required for train operation; starting all traction units to participate in electric braking when a total electric braking force that the train can provide is not greater than the target braking force; and making at least one traction unit not participate in the electric braking or unevenly starting all traction units to participate in the electric braking when the total electric braking force that the train can provide is greater than the target braking force. Unevenly starting all traction units to participate in the electric braking means that there exists a traction unit providing the electric braking force not being 100% of a maximum electric braking force that the traction unit can provide, for example, the traction unit providing electric braking forces being 10%, 20%, 30%, 40%, 50%, 60%, 70%, 80%, or 90% of the maximum electric braking force that the traction unit can provide.

In some embodiments, the step of distributing the first traction force unevenly to each traction unit includes steps of: distributing the first traction force to a minimum number of traction units that can withstand.

In some embodiments, the step of distributing the first traction force unevenly to each traction unit includes steps of: dividing train control handle notch positions into N notch intervals according to a number N of traction units of the train, wherein the notch intervals sequentially are a first notch interval, a second notch interval, ..., an Nth notch interval from low to high, where $N \geq 2$, and N is an integer; making the total traction force that the train can provide correspond to a highest notch position of the train control handle; calculating a first notch position of the train control handle required for train operation according to the first traction force; distributing the first traction force to 1 traction unit when the first notch position falls into the first notch interval; distributing the first traction force to 2 traction units when the first notch position falls into the second notch interval; ...; and distributing the first traction force to N traction units when the first notch position falls into the N-th notch interval.

In some embodiments, the step of calculating a first traction force required for train operation includes steps of: determining a section segment where the train is located, road condition information of the section segment, a running direction, and a running speed according to line information of the train operation and position information of the train; determining an actual weight of the train according to the passenger load and an actual weight of the train; determining a current adhesion coefficient according to the train running speed, a weather state, and a rail surface state; and calculating the traction force required for operation of the train in the current section segment or the traction force required for operation of the train in a next section segment according to the road condition information of the section segment where the train is located, the running direction, the actual weight, and the adhesion coefficient.

In some embodiments, all carriages of the train are provided with traction control units and traction units, or the train includes motor carriages and trailer carriages, and each motor carriage is provided with a traction control unit and a traction unit.

In some embodiments, the method further includes steps of: determining whether the train is in a switchable environment in response to the accumulated working duration of the traction unit currently providing the traction force being greater than the first duration threshold, wherein the switchable environment is a downhill rail section segment or a straight rail section segment.

In some embodiments, the method further includes steps of: acquiring the operation information of the train in real time; calculating a second traction force required for train operation according to the operation information; determining whether an absolute value of a difference between the second traction force and the first traction force exceeds a second error threshold; replacing the first traction force with the second traction force in response to the absolute value of the difference between the second traction force and the first traction force being greater than the second error threshold, and then distributing the first traction force unevenly to each traction unit.

In a second aspect, an embodiment of the present disclosure provides an onboard controller, including a memory, a processor, and a computer program stored in the memory and executable on the processor, where the processor implements the control method for the train with the variable motor-to-trailer ratio as described in any one of the above embodiments when executing the computer program.

In a third aspect, an embodiment of the present disclosure provides a rail train, including the onboard controller as described in the above embodiments.

Beneficial effects that the present disclosure can achieve are as follows.

A control method for the train with the variable motor-to-trailer ratio provided by the present disclosure includes steps of: calculating traction force required for train operation according to acquired line information of train operation, position information, passenger load, rail surface state, and weather state; distributing the traction force unevenly to each traction unit, and monitoring an accumulated working duration of each traction unit currently providing the traction force; shutting down the traction unit once upon the accumulated working duration is greater than a set first duration threshold, and switching to another traction unit not currently providing the traction force. In the present disclosure, the traction force is distributed unevenly, and a rotation working of traction units of different carriages is carried out according to the accumulated working duration, thereby realizing control of the variable motor-to-trailer ratio. On one hand, providing adaptive traction force according to actual traction force requirement reduces self-loss of the traction system and auxiliary energy consumption, thereby realizing energy saving of the system. On the other hand, the rotation working of traction units of different carriages is carried out according to the working duration, thereby prolonging the maintenance interval and service life of the traction units.

In order to make the above objectives, features, and advantages of the present disclosure more obvious and easier to understand, the following better embodiments, together with the attached drawings, are described in detail as follows.

## BRIEF DESCRIPTION OF DRAWINGS

To more clearly illustrate the technical solutions of the embodiments of the present disclosure, the following will briefly introduce the drawings used in the embodiments. It should be understood that the following drawings only show some embodiments of the present disclosure, and therefore they should not be regarded as a limitation on the scope. Those ordinarily skilled in the art can also obtain other related drawings based on these drawings without inventive effort.

FIG. 1 shows a schematic diagram of configuration of a 6-car formation rail train of the present disclosure;
FIG. 2 shows a flowchart of a control method for a train with a variable motor-to-trailer ratio of the present disclosure;

FIG. 3 shows a schematic diagram of a traction force distribution of a control method for a train with a variable motor-to-trailer ratio of the present disclosure;

FIG. 4 shows another schematic diagram of a traction force distribution of a control method for a train with a variable motor-to-trailer ratio of the present disclosure;

FIG. 5 shows another schematic diagram of a traction force distribution of a control method for a train with a variable motor-to-trailer ratio of the present disclosure; and

FIG. 6 shows a flowchart of a control method for a train with a variable motor-to-trailer ratio a step of determining with a switchable environment of the present disclosure.

Reference numerals: 1 - carriage; 2 - central control unit; 3 - traction control unit; 4 - braking control unit; 5 - MVB; 7 - train operation control unit; 8 - first carriage traction control unit; 9 - second carriage traction control unit; 10 - third carriage traction control unit; 11 - fourth carriage traction control unit; 12 - fifth carriage traction control unit; 13 - sixth carriage traction control unit.

## DETAILED DESCRIPTION OF EMBODIMENTS

In the specification and claims of the present disclosure and in the drawings, the terms "comprise" and "include", "contain" or "wherein" are synonymous, and are inclusive of endpoints or are open-ended, and do not exclude additional undisclosed elements or method steps. "Comprise" is a technical term used in claim language, meaning the presence of the element, but other elements can also be added and still form a construction or method within a scope of the claim.

It should be noted that similar numerals and letters denote similar terms in the following drawings. Therefore, once an item is defined in one drawing, it does not need to be further discussed in subsequent drawings. In addition, the terms "first", "second", and "third" are only used to distinguish the descriptive and are not to be construed as indicating or implying relative importance. In the present disclosure, the term "about" means including minor variations of the value (up to +/-10%).

In the present disclosure, it has been found that since traction power required under most working conditions during train operation process is relatively small, a part of traction components can be actively cut off after an advance determination, the motor-to-trailer ratio of the train can be changed, and the self-loss and auxiliary energy consumption of the traction system can be reduced, thereby realizing the energy saving of the system.

Based on this, the present disclosure provides a control method for the train with the variable motor-to-trailer ratio, including the following steps of: acquiring operation information of a train, wherein the operation information includes line information, position information, passenger load, rail surface state, and weather state; calculating a first traction force required for train operation according to the operation information; distributing the first traction force unevenly to each traction unit, wherein at least one traction unit does not provide the traction force; acquiring an accumulated working duration of each traction unit currently providing the traction force; comparing the accumulated working duration of each traction unit currently providing the traction force with a first duration threshold; shutting down the traction unit in response to the accumulated working duration of the traction unit currently providing the traction force being greater than the first duration threshold; resetting the accumulated working duration of the traction unit to zero; and starting another traction unit not currently providing the traction force.

A control method for the train with the variable motor-to-trailer ratio provided by the embodiment of the present disclosure includes steps of: calculating traction force required for train operation according to acquired line information of train operation, position information, passenger load, rail surface state, and weather state; distributing the traction force unevenly to each traction unit, and monitoring an accumulated working duration of each traction unit currently providing the traction force; shutting down the traction unit once upon the accumulated working duration is greater than a set first duration threshold, and switching to another traction unit not currently providing the traction force. In the present disclosure, the traction force is distributed unevenly, and a rotation working of traction units of different carriages is carried out according to the working duration, thereby realizing control of variable motor-to-trailer ratio. On one hand, providing adaptive traction force according to actual traction force requirement reduces self-loss of the traction system and auxiliary energy consumption, thereby realizing energy saving of the system. On the other hand, the rotation working of traction units of different carriages is carried out according to the working duration, thereby prolonging the maintenance interval and service life of the traction units.

The technical solutions in the embodiments of the present disclosure will be clearly and completely described below in conjunction with the drawings in the embodiments of the present disclosure. Obviously, the described embodiments are a part of the embodiments of the present disclosure, and not all of the embodiments. Based on the embodiments in the present disclosure, all other embodiments obtained by those of ordinary skill in the art without making inventive efforts are within the scope of protection of the present disclosure.

The term "embodiment" used herein means that specific features, structures, or characteristics described in conjunction with the embodiment can be included in at least one embodiment of the present disclosure. The use of the phrase in various parts of the summary does not necessarily refer to the same embodiment, nor does it imply that these embodiments are mutually exclusive or independent of each other. Those skilled in the art understand explicitly and implicitly that the embodiments described herein can be combined with other embodiments.

The motor-to-trailer ratio is a configuration ratio of motor cars and trailer cars, such as three motor and three trailer (3M3T), four motor and two trailer (4M2T), five motor and one trailer (5M1T), and six motor and zero trailer (6M0T). It is an important index of configuration of traction power units of a train. In the present disclosure, it has been found that current rail trains generally adopt a fixed motor-to-trailer ratio, that is, the motor-to-trailer ratio is the same during a passenger flow low period and during a passenger flow peak period. During the passenger flow peak period, there are more passengers and the load is larger, and during the passenger flow low period, the passenger flow is small and the load is smaller. If the motor-to-trailer ratio during the passenger flow low period is still the same as that during the passenger flow peak period. The same consumption with large power pulling a light train causes waste of electric energy. During the train operation process, the traction power required under most working conditions is relatively small. In trains with a fixed motor-to-trailer ratio, system loss and auxiliary loss are relatively large, which is not conducive to realizing energy saving of the system. In addition, the required configuration of motor-to-trailer ratio is different according to the line of the rail train operation or the actual operation condition. For example, when an urban train operates on a subway line, the station interval distance is short, a higher acceleration is required, and a higher configuration of motor-to-trailer ratio is required. When operating on an intercity railway, the station interval distance is long, a higher speed is required, and a lower motor-to-trailer ratio can be configured to meet the train operation requirement. A fixed motor-to-trailer ratio cannot exert the advantages of the urban train.

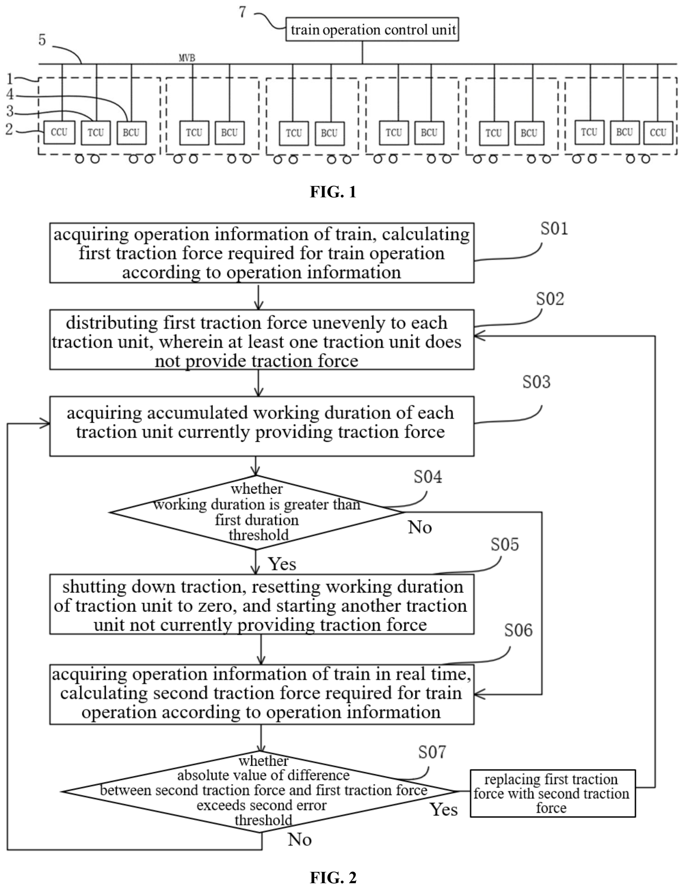

The present disclosure provides a rail train with a variable motor-to-trailer ratio. In this embodiment, a 6-car formation train is taken as an example. A person skilled in the art can understand that apparatus or method provided by the present disclosure can also be applied to trains with other formation numbers, such as 4-car formation, 8-car formation, 12-car formation, and 16-car formation. As shown in FIG. 1, in a train configuration of a 6-car formation train, each carriage 1 is provided with a traction control unit 3 (TCU) and a braking control unit 4 (BCU). Two carriages 1 at head and tail are provided with a central control unit 2 (CCU), a traction control unit 3 (TCU), and a braking control unit 4 (BCU). The central control unit 2, the traction control unit 3, and the braking control unit 4 are all connected to a multifunction vehicle bus (MVB). The connection is realized through the multifunction vehicle bus (MVB), that is, the central control unit 2, the traction control unit 3, and the braking control unit 4 are connected on the MVB 5. The central control unit 2 sends control instructions to the traction control unit 3 and the braking control unit 4 through the MVB 5, and receives corresponding state data. A driver cab is further provided with a train operation control unit 7. The train operation control unit 7 is also connected to the MVB 5. The train operation control unit 7 and the central control unit 2 (CCU) of each carriage are connected through the MVB 5 to realize control of the entire train.

In other embodiments, the train operation control unit 7 can also be a module in the central control unit 2 (CCU) of where the driver cab is located. The train operation control unit 7 realizes control of the train.

In the present disclosure, a traction converter and a traction motor on the carriage are collectively referred to as a traction unit. In this embodiment, in the 6-car formation train shown in FIG. 1, six carriages are arranged, wherein each of the carriages is provided with a traction control unit 3, a braking control unit 4, and a traction unit, and two central control units 2 are further arranged on carriages at head and tail. In other embodiments, according to a situation of maximum traction demand of train operation, a part of six carriages can be arranged as trailer carriages, for example, four carriages of six carriages of the train are provided with the traction control unit 3, the braking control unit 4, and the traction unit, and two carriages are arranged as trailer carriages.

The present disclosure provides a control method for a train with a variable motor-to-trailer ratio, as shown in FIG.2, including the following steps of S01 to S07.

Step S01: acquiring operation information of a train, wherein the operation information includes line information, position information, passenger load, rail surface state, and weather state; calculating a first traction force required for train operation according to the operation information.

Step S02: distributing the first traction force unevenly to each traction unit, wherein at least one traction unit does not provide the traction force.

Step S03: acquiring an accumulated working duration of each traction unit currently providing the traction force.

Step S04: comparing the accumulated working duration of each traction unit currently providing the traction force with a first duration threshold; entering step S05 when an accumulated working duration of a traction unit currently providing the traction force is greater than a first duration threshold; and entering step S06 when the accumulated working duration of the traction unit currently providing the traction force is not greater than the first duration threshold.

Step S05: shutting down the traction unit in response to the accumulated working duration of the traction unit currently providing the traction force being greater than the first duration threshold; resetting the working duration of the traction unit to zero; and starting another traction unit not currently providing the traction force.

Step S06: acquiring the operation information of the train in real time; calculating a second traction force required for train operation according to the operation information.

Step S07: determining whether an absolute value of a difference between the second traction force and the first traction force exceeds a second error threshold; and re-entering step S03 when the absolute value of the difference between the second traction force and the first traction force is not greater than the second error threshold; replacing the first traction force with the second traction force when the absolute value of the difference between the second traction force and the first traction force is greater than the second error threshold; and then distributing the first traction force unevenly to each traction unit, i.e., re-entering step S02.

In step S01, the line information is information of an actual line of train operation, specifically including information such as departure station, arrival station, main stations along route, gradient information, curve information, inter-station distance information, and speed limit information.

Position information refers to a position where train is located at a current moment. The position where the train is located at the current moment can be determined through positioning by an onboard positioning system (such as GPS global positioning system and Beidou positioning system) provided on the train. An odometer on the train calculates a mileage of train travel according to a recorded number of wheel revolutions (for example, by sensing wheel rotation through a magnetic sensor or photoelectric sensor) multiplied by a circumference thereof. Since the rail line of train is one-dimensional, that is, a specific position of train can be determined according to mileage position of train on line. The mileage can be used in the positioning system of train. In some embodiments, a train operation control unit or a central control unit (CCU) can obtain mileage information transmitted through the MVB from an onboard signaling system, and positioning of train can be realized according to a preset coordinate mileage model. The coordinate mileage model records a correspondence between each static coordinate and track mileage of line to be measured. The static coordinate in the coordinate mileage model is a coordinate of the track of the line to be measured, and does not change with the movement of the train. According to the line information of train operation and the position information of train, a region section where train is located can be determined. The region section can be, for example, a train station region section. Its line includes 13 stations, respectively station 1, station 2 ... to station 13, totally including 12 region sections.

Passenger load refers to real-time number of passengers carried on train. In some embodiments, a total weight of passengers in the carriage can be obtained based on a weight sensor provided at the bottom of the carriage, thereby estimating passenger load. In some embodiments, a total weight of passengers in the carriage can be determined based on a difference of weights collected by a weight sensor preset on the platform, thereby estimating passenger load. In some embodiments, a passenger load can also be determined based on performing face recognition on images collected by cameras provided in the platform or in subway trains, and performing counting.

In the railway system, the definition of adhesion force is a maximum traction force that can be provided between the wheels and the rail under the condition that the wheels and the rail maintain contact without wheel slipping or sliding. Under an action of axle load, elastic deformation occurs at the wheel-rail contact part, forming an elliptical contact region. When the wheels roll forward under the action of a driving torque, an elastic deformation occurs in the wheel-rail material near the contact region, thereby generating a tangential force on the contact surface to make the wheels roll forward. This state of wheel-rail contact that includes both rolling and sliding is called adhesion. Only when wheel-rail is in an adhesion state can adhesion force be generated, and thus, a final power for making the locomotive train move forward can be formed. Adhesion force formula is: $F_\mu = \mu \times M_A \times g$, where $F_\mu$ is the adhesion force generated between the wheels and the rail, $\mu$ is the adhesion coefficient, $M_A$ is a total mass of axle load and average load, and g is gravitational acceleration.

Adhesion characteristics of the rail surface directly affect the actual traction force and the braking force output by the train. The adhesion coefficient $\mu$ is affected by multiple factors, such as rail surface state, running speed, wheel-rail material, line gradient, driving mode, curve curvature, and axle load and axle load transfer, and is usually a variable value. Generally, when the rail surface is dry, the usable adhesion coefficient does not change significantly. However, under rain, snow, heavy fog, or when there are fallen leaves or oil on the track, the rail surface becomes slippery, the usable adhesion coefficient decreases, and the traction force and braking force of rail trains sharply decrease.

Adhesion utilization rate $\beta$ is defined as: $\beta = (\mu / \mu_{max}) \times 100\%$, where $\mu$ is the adhesion coefficient, and $\mu_{max}$ is a maximum value of the adhesion coefficient. The greater the adhesion utilization rate $\beta$ is, the closer the actual adhesion coefficient $\mu$ utilized approaches the maximum adhesion coefficient $\mu_{max}$, and the greater the adhesion force $F_\mu$ generated between the wheels and the rail is.

In the present disclosure, the adhesion coefficient $\mu$ is adjusted in real time according to different weather conditions, and expressed by an adhesion characteristic curve function:

$$\mu(v_s) = ce^{-av_s} - de^{-bv_s},$$

where $\mu(V_s)$ is the adhesion coefficient at train running speed $V_s$, $V_s$ is the train running speed (km/h), and a, b, c, and d are rail surface adhesion condition parameters. Values of a, b, c, and d are determined by a condition of the rail surface on which the current wheelset is located, and are positive constants. Under different weather conditions and different rail surface situations, values of adhesion characteristic curve parameters are shown in Table 1.

Table 1 Values of adhesion characteristic curve parameters under different rail surface states

| Different railway conditions | a | b | c | d |
|---|---|---|---|---|
| Dry rail surface | 0.54 | 1.2 | 1.2 | 1.2 |
| Wet rail surface 1 | 0.27 | 0.83 | 0.5 | 0.5 |
| Wet rail surface 2 | 0.19 | 0.54 | 0.4 | 0.4 |

Dry rail surface refers to a rail surface being dry; wet rail surface 1 refers to slightly wet rail surface, wherein the rail surface is moist; and wet rail surface 2 refers to a rail surface under rain or snow conditions. During calculation, by setting different rail surface adhesion condition parameters according to weather state and rail surface state, the adhesion coefficient under the current rail surface state can be obtained. For example, sunny/cloudy and dry rail surface corresponds to "dry rail surface state"; sunny/cloudy and slightly wet rail surface corresponds to "wet rail surface 1"; and rain/snow and wet rail surface corresponds to "wet rail surface 2". In some embodiments, weather state and rail surface state can be manually determined and input in real time from a train monitoring system display (HMI), wherein the input information can be transmitted in real time to the train operation control unit. In some embodiments, the train operation control unit 7 or a central control unit (CCU) can obtain weather state and rail surface state from a remote-control center through a wireless network. In some embodiments, a machine vision system provided on a train bogie, for example, a vision hardware system using a high-speed 3D camera and infrared laser, can also be used to obtain the rail surface state and the weather state.

Generally, during traction, the adhesion coefficient is taken as 0.16-0.18, and during braking, the adhesion coefficient is taken as 0.14-0.16.

In step S01, the step of calculating a first traction force required for train operation includes steps of S0101 and S0102.

S0101: determining a section segment where the train is located, road condition information of the section segment, a running direction, and a running speed according to line information of the train operation and position information of the train; determining an actual weight m of the train according to the passenger load and the train weight; and determining a current adhesion coefficient $\mu$ according to the train running speed, a weather state, and a rail surface state.

S0102: calculating the traction force required for the train in the current section segment according to the road condition information of the section segment where the train is located, the running direction, the actual weight, and the adhesion coefficient. In some embodiments, the traction force required for the train in a next section segment can also be calculated. Road condition information of a section segment includes, for example, a length of a gradient track section segment and an angle $\theta$ between a gradient and a horizontal direction, a length of a curved rail section segment and a curve radius R, etc.

(1) If the train is located in a straight track section segment, the traction force required for the train operation satisfies a condition of $F = \mu \times m \times g$, where m is the actual weight of the train, $\mu$ is the adhesion coefficient, and g is gravitational acceleration, taken as 9.8 m/s2.
(2) If the train is located in a downhill gradient track section segment, a traction force required for train operation satisfies the following conditions.

When $\mu \times m \times g \times \cos\theta$ is not greater than $m \times g \times \sin\theta$, a minimum traction force required for the train can be 0; and
when $\mu \times m \times g \times \cos\theta$ is greater than $m \times g \times \sin\theta$, a traction force required for the train satisfies a condition of $F = \mu \times m \times g \times \cos\theta - m \times g \times \sin\theta$, where $\theta$ is an angle between the gradient and the horizontal direction.

(3) If the train is located in an uphill rail section segment, a traction force required for train operation satisfies a condition of $F = \mu \times m \times g \times \cos\theta + m \times g \times \sin\theta$, where $\theta$ is an angle between the gradient and the horizontal direction.

(4) If train is located in a curved rail section segment, a traction force required for train operation satisfies a condition of $F = \mu \times m \times g + \omega$, where $\omega$ is a curve additional resistance, and $\omega = (A \times m \times g) / R$; A is a constant, between 450-800; and R is a curve radius, in meters.

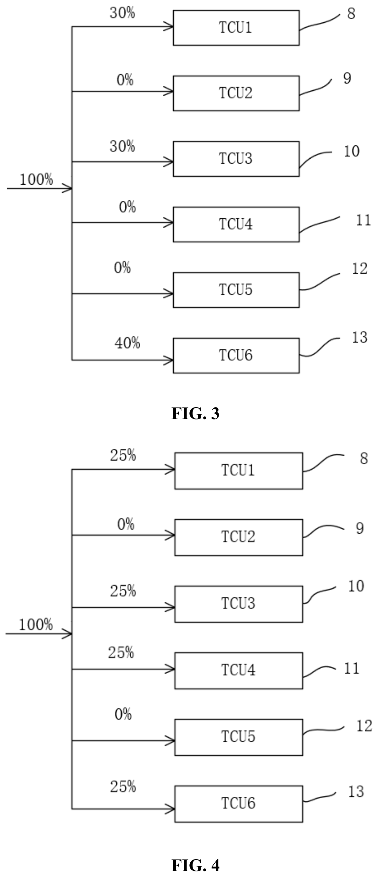

The traction control unit adjusts speed by controlling the voltage and frequency of the traction motor, thereby obtaining the torque and rotational speed provided by the traction motor required by the train. In step S02, the traction force required for train operation is unevenly distributed. In some embodiments, each carriage is provided with a traction control unit 3, a braking control unit 4, and a traction unit. As shown in FIG. 3, in a 6-car formation train, the traction force required for the train operation is unevenly distributed to the traction units of the respective carriages. For example, a first carriage traction control unit 8 provides 30% of the traction force required for the train operation, a third carriage traction control unit 10 provides 30% of the traction force required for the train operation, a sixth carriage traction control unit 13 provides 40% of the traction force required for the train operation, and the traction control units of remaining carriages temporarily do not provide the traction force.

In some embodiments, for example, as shown in FIG. 4, a first carriage traction control unit 8 provides 25% of the traction force required for the train operation, a third carriage traction control unit 10 provides 25% of the traction force required for the train operation, a fourth carriage traction control unit 11 provides 25% of the traction force required for the train operation, a sixth carriage traction control unit 13 provides 25% of the traction force required for the train operation, and the traction control units of remaining carriages temporarily do not provide traction force.

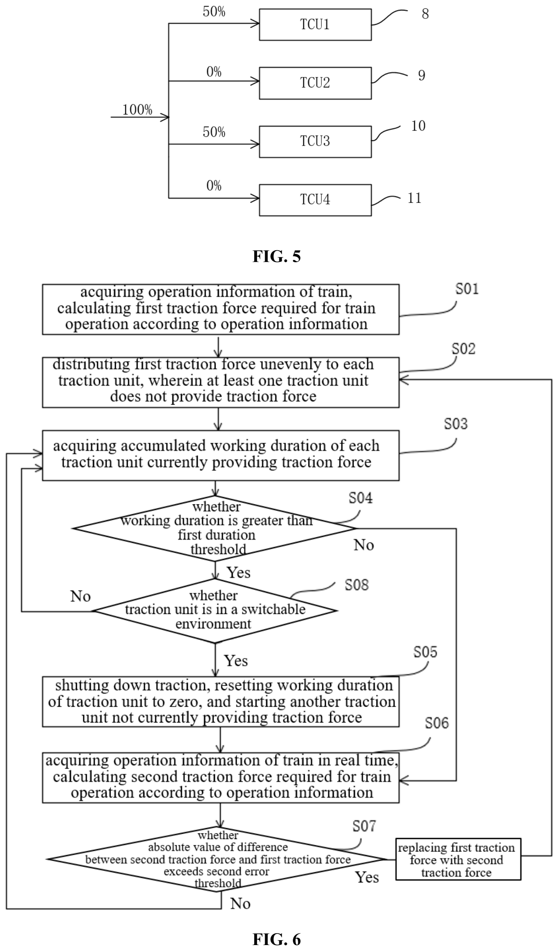

In some embodiments, the train includes motor carriages and trailer carriages, and each motor carriage is provided with a traction control unit and a traction unit. For example, the train is provided with four motor cars and two trailer cars, and the carriages of the four motor cars are all provided with a traction control unit 3, a braking control unit 4, and a traction unit. As shown in FIG. 5, the first carriage traction control unit 8 provides 50% of the traction force required for the train operation, the third carriage traction control unit 10 provides 50% of the traction force required for the train operation, and the traction control units of the remaining carriages temporarily do not provide the traction force.

In some embodiments of the present disclosure, the first traction force required for the train operation is distributed to the minimum number of traction units that can withstand, i.e., the minimum number of motor carriages. If one traction unit can satisfy the traction force required by the train, a traction unit of one carriage is first started. Then, when it is detected that the accumulated working duration of the traction unit is greater than a first threshold, another traction unit of another carriage is switched on, and a rotation working of different traction units is carried out according to the working duration, thereby realizing the control of variable motor-to-trailer ratio. In some embodiments, the train operation control unit 7 determines the number of traction units that can be started and the number of traction units that can be turned off according to the traction force required for the train operation, selects the traction unit of the carriage that can be enabled, and sends a signal to the central control unit 2 of the carriage; and the central control unit 2 of the carriage sends a signal to the traction control unit 3 to enable the traction unit of the carriage.

In some embodiments, the number of traction units is determined according to the train control handle notch positions. In the present disclosure, the step of distributing the first traction force unevenly to each traction unit includes steps of S0201 to S0203.

S0201: dividing train control handle notch positions into N notch intervals according to a number N of traction units of the train, wherein the notch intervals sequentially are a first notch interval, a second notch interval, ..., an Nth notch interval from low to high, where N ≥ 2, and N is an integer.

S0202: making the total traction force that the train can provide correspond to a highest notch position of the train control handle; and calculating a first notch position of the train control handle required for train operation according to the first traction force.

S0203: distributing the first traction force to 1 traction unit when the first notch position falls into the first notch interval; distributing the first traction force to 2 traction units when the first notch position falls into the second notch interval; ...; and distributing the first traction force to N traction units when the first notch position falls into the N-th notch interval.

For example, the train control handle has 100 notch positions, and the step length of notch position division is 100/N, where N is the number of traction units of the train. Taking a 6-car formation train of 4 motor cars and 2 trailer cars as an example, N = 4, that is, the first notch position interval including notch positions 0-25 corresponds to one traction control unit (TCU), the second notch position interval including notch positions 25-50 corresponds to two TCUs, the third notch position interval including notch positions 50-75 corresponds to three TCUs, and the fourth notch position interval including notch positions 75-100 corresponds to four TCUs. The selection of TCUs is performed sequentially in rotation according to the first-in-first-out principle. For example, if the traction force required for the train operation is 200 kN, in the 6-car formation train of 4 motor cars and 2 trailer cars, each motor car can provide a traction force of 150 kN, and the total traction force the train can provide is 600 kN. By taking 600 kN corresponding to the highest train control handle notch position 100, the first notch position of the train control handle required for the train operation is calculated as $(200 \times 100) \div 600 \approx 34$. The first notch position falls within the notch position 25-50, corresponding to two TCUs. The traction force can then be distributed to two motor cars (distributed evenly, e.g., 100 kN each, or unevenly, e.g., one motor car 150 kN and the other motor car 50 kN, both being acceptable), and the other two motor cars temporarily do not provide the traction force. When the accumulated working duration of the traction units of the first two motor cars in operation is greater than the first duration threshold, the system switches to operate the traction units of the other two motor cars not currently providing the traction force.

In step S03, the accumulated working duration of each traction unit that is currently providing the traction force is obtained. The first traction force changes according to the section segment of train operation, passenger load, and adhesion coefficient, and the number of carriages providing the traction force also changes, so the accumulated working duration of the traction units of each carriage during train operation will vary.

In step S04, the working duration of each traction unit of the carriages currently providing the traction force is compared with the first duration threshold. For example, in some embodiments, the first duration threshold is set to 2-72 h, such as 2 h, 4 h, 6 h, 8 h, 12 h, 16 h, 20 h, 24 h, 32 h, 36 h, 40 h, 48 h, 56 h, 64 h, and 72 h. Generally, it is determined according to the length of the line, so that the use of each traction unit is relatively balanced, thereby avoiding a situation where one traction unit operates for too long.

In step S05, traction unit switching is performed. The central control unit 2 or traction control unit 3 in each carriage is provided with a timing unit for traction unit operation. Once the traction unit of the carriage is turned off, the accumulated working duration of the carriage is recorded as 0. When the traction unit of the carriage is restarted, timing will restart.

In step S06, the step of calculating the traction force required for the train operation in step S01 is repeated. Since conditions such as section segment of the train running line, passenger load, adhesion utilization ratio, and running speed all change during operation, the traction force required for the train operation also changes according to different conditions, thereby the ratio of motor cars to trailer cars in the train also changes according to the traction force requirement.

In step S07, in some embodiments, preferably, the second error threshold can be 0-20 kN, for example, it can be 0, 1 kN, 2 kN, 3 kN, 4 kN, 5 kN, 6 kN, 7 kN, 8 kN, 9 kN, 10 kN, 15 kN, 20 kN, etc.

In the present disclosure, the traction control unit 3 and the braking control unit 4 are provided in the carriage. When the train operation control unit 7 determines that the traction is required, a traction command is sent through MVB to the central control unit 2, and the central control unit 2 forwards the traction command to the traction control unit 3 to control the traction motor to output corresponding traction force. When the train operation control unit 7 determines that the braking is required, a braking command is sent through MVB to the central control unit 2, and the central control unit 2 forwards the braking command to the brake control unit 4 to control the traction motor to perform electric braking and generate corresponding braking force. By sending traction commands or braking commands from the train operation control unit 7 to the central control unit 2, the train is controlled to uniformly perform traction action or braking action, which can effectively ensure the consistency of actions among motor cars in the train, thereby avoiding a situation where some motor cars are in the traction state and some motor cars are in the braking state, preventing unrecoverable damage to the wheels and the rail, and ensuring the safety of the train operation.

In the present disclosure, according to line conditions and actual weight, the required traction force and electric braking force are calculated in real time, and combined with the line adhesion coefficient, the number of motor cars required is determined at this time. Then, the required traction and electric braking force are distributed to the traction systems of trains according to a non-uniform principle. For example, when the system power is relatively low, in the 4M2T formation, among four motor cars, two motor cars may receive a traction command as 0, and the other two motor cars may receive 20% of the maximum traction force of the motor car. During electric braking, four motor cars participate in feedback energy simultaneously, and at this time, four motor cars receive the electric braking command as 100%.

In some embodiments, the control method for the train with the variable motor-to-trailer ratio further includes steps of: calculating a target braking force required for train operation; starting all traction units to participate in electric braking when a total electric braking force that the train can provide is not greater than the target braking force; and making at least one traction unit not participate in the electric braking or unevenly starting all traction units to participate in the electric braking when the total electric braking force that the train can provide is greater than the target braking force. Unevenly starting all traction units means that there exists the traction unit providing the electric braking force less than 100% of a maximum electric braking force that the traction unit can provide, for example, the traction unit providing electric braking force being 10%, 20%, 30%, 40%, 50%, 60%, 70%, 80%, or 90% of the maximum electric braking force that the traction unit can provide. For example, according to train braking parameters, the target braking force required by the train is calculated. The target braking force can be provided by the electric braking of motor cars and/or air braking, wherein the electric braking is provided by the traction system of the train, and the air braking is provided by the braking system of the train. The maximum electric braking force $B_{MAX}$ that the traction unit of motor car can provide is determined according to the product of the adhesion coefficient y under braking condition and the current mass m of the train, i.e., $B_{MAX} = y \times m$. The calculation of the target braking force can adopt the first relation formula: $BR = 1.09 \times p \times m$, where BR is the braking force demand of the train, p is the current braking notch position, and m is the current train mass. In general, the current braking notch position P is determined by the notch position signal output by the signaling system. If the rail transit train is in the PM (protected manual driving) mode, the current braking notch position is determined by the master controller signal output by the master controller. When the total electric braking force that the train can provide is less than or equal to the target braking force, it indicates that the braking force demand of the train cannot be met only by applying electric braking force from the traction system, and the traction units of all motor cars simultaneously participate in feedback energy. At this time, the four motor cars each receive 100% of the electric braking command. When the total electric braking force that the train can provide is greater than the target braking force, it indicates that the traction system can provide sufficient electric braking force to meet the braking force demand of the train. Some motor cars can receive electric braking commands and participate in electric braking, and the remaining train cars do not provide electric braking. If the air braking is required for supplementation, the remaining braking force is supplemented by the air braking and other means. In some embodiments, the electric braking force sizes provided by motor cars can also be non-uniform. For example, the first motor car provides 100% of the maximum electric braking force it can provide, the second motor car provides 100% of the maximum electric braking force it can provide, the third motor car provides 100% of the maximum electric braking force it can provide, and the fourth motor car provides 50% of the maximum electric braking force it can provide.

In the present disclosure, when the train runs on a line with a gradient, the train operation control unit 7 can obtain the current line section, gradient size, running direction, and driving capacity acquired from the traction system according to the obtained line information and position information of the train. At the same time, according to the passenger load and the actual adhesion coefficient of the rail surface, the train operation control unit 7 automatically adjusts the traction force required for train operation and automatically adjusts the configuration of the motor-to-trailer ratio of the train, so that the train can automatically adapt to the line gradient, load, driving capacity, and other conditions.

In some embodiments, as shown in FIG. 6, the method further includes step S08, determining whether the traction unit of the train is in a switchable environment; proceeding to step S05 to shut down the traction unit of the carriage when the traction unit of the train is in a switchable environment, resetting the working duration of the traction unit of the carriage to 0, and starting another traction unit of a carriage that is not currently providing the traction force; or, re-entering step S03 and continuing to operate the traction unit of the train until the train is in a switchable environment when the traction unit of the train is not in a switchable environment. In general, in order to ensure the safety of train operation, the downhill rail section segment and the straight rail section segment are set as environments in which switching can be performed, and the uphill rail section segment and the curved rail section segment are set as environments in which switching cannot be performed. In the present disclosure, the current line section, gradient size, whether the track is curved, and running direction can be obtained according to the obtained line information and position information of the train, thereby determining whether the train is in a switchable environment.

A control method for the train with the variable motor-to-trailer ratio provided by the present disclosure includes steps of: calculating traction force required for train operation according to acquired line information of train operation, position information, passenger load, rail surface state, and weather state; distributing the traction force unevenly to the traction unit of each carriage, and monitoring the accumulated working duration of the traction unit of each carriage currently providing the traction force; shutting down the traction unit of the carriage once upon the accumulated working duration is greater than the set first duration threshold, and switching to another traction unit of the carriage not currently providing the traction force. In the present disclosure, the traction force is distributed unevenly, and a rotation working of traction units of different carriages is carried out according to the working duration, thereby realizing control of variable motor-to-trailer ratio. On one hand, providing adaptive traction force according to actual traction force requirement reduces self-loss of the traction system and auxiliary energy consumption, thereby realizing energy saving of the system. On the other hand, the rotation working of traction units of different carriages is carried out according to the working duration, thereby prolonging the maintenance interval and service life of the traction units.

In an embodiment, an onboard controller is provided, including a memory, a processor, and a computer program stored in the memory and executable on the processor, wherein the processor implements the control method for the train with the variable motor-to-trailer ratio as described the above embodiments when executing the computer program, such as the flow shown in FIG. 2 and FIG. 6. To avoid repetition, details are not repeated herein. Accordingly, an embodiment of the present disclosure provides a rail train, including the onboard controller as described in the above embodiments.

In one embodiment, a computer-readable storage medium is provided. A computer program is stored on a computer-readable storage medium. When the computer program is executed by a processor, the control method for train variable motor-trailer ratio in the above embodiment is implemented, such as the flow shown in FIG. 2 and FIG. 6. To avoid repetition, details are not repeated herein.

Those of ordinary skill in the art can understand that the implementation of all or part of the processes in the above-described embodiment methods can be completed by instructing related hardware through a computer program. The computer program can be stored in a non-volatile computer-readable storage medium; and when executed, the computer program can include the processes of the embodiment methods as described above. Any reference to memory, storage, database, or other media used in the embodiments provided in the present disclosure can include non-volatile and/or volatile memory. Non-volatile memory can include Read-Only Memory (ROM), Programmable ROM (PROM), Electrically Programmable ROM (EPROM), Electrically Erasable Programmable ROM (EEPROM), or flash memory. Volatile memory can include Random Access Memory (RAM) or external high-speed cache memory. For illustration and not limitation, RAM can be available in various forms, such as Static RAM (SRAM), Dynamic RAM (DRAM), Synchronous DRAM (SDRAM), Double Data Rate SDRAM (DDR SDRAM), Enhanced SDRAM (ESDRAM), Synch Link DRAM (SLDRAM), Rambus Direct RAM (RDRAM), Direct Rambus Dynamic RAM (DRDRAM), and Rambus Dynamic RAM (RDRAM), etc.

The above provides a detailed description of embodiments of the present disclosure, in which specific examples are applied to elaborate the principles and implementation manners of the present disclosure. The description of the above embodiments is only for helping to understand the method of the present disclosure and its core idea. Meanwhile, for those skilled in the art, modifications in specific implementation manners and application scope may be made based on the idea

**EP 4 682 010 A1**

of the present disclosure. In summary, the content of the present specification should not be construed as a limitation to the present disclosure.

**Claims**

1.  A control method for a train with a variable motor-to-trailer ratio, **characterized by** comprising following steps:

    acquiring operation information of the train, wherein the operation information comprises line information, position information, a passenger load, a rail surface state, and a weather state; calculating a first traction force required for train operation according to the operation information;
    distributing the first traction force unevenly to each traction unit, wherein at least one traction unit does not provide the traction force;
    acquiring an accumulated working duration of each traction unit currently providing the traction force; and
    comparing the accumulated working duration of the each traction unit currently providing the traction force with a first duration threshold; shutting down the traction unit in response to the accumulated working duration of the traction unit currently providing the traction force being greater than the first duration threshold; resetting the accumulated working duration of the traction unit to zero; and starting another traction unit not currently providing the traction force.

2.  The control method for the train with the variable motor-to-trailer ratio according to claim 1, further comprising a step of: calculating a target braking force required for the train operation; starting all traction units to participate in electric braking when a total electric braking force that the train is able to provide is not greater than the target braking force; and making at least one of the traction units not participate in the electric braking or unevenly starting all traction units to participate in the electric braking when the total electric braking force that the train is able to provide is greater than the target braking force.

3.  The control method for the train with the variable motor-to-trailer ratio according to claim 1, wherein a step of distributing the first traction force unevenly to each traction unit comprises a step of: distributing the first traction force to a minimum number of traction units that is able to withstand.

4.  The control method for the train with the variable motor-to-trailer ratio according to claim 1, wherein a step of distributing the first traction force unevenly to each traction unit comprises steps of:

    dividing train control handle notch positions into N notch intervals according to a number N of traction units of the train, wherein the notch intervals sequentially are a first notch interval, a second notch interval, ..., an Nth notch interval from low to high, where $N \geq 2$, and N is an integer;
    making a total traction force that the train can provide correspond to a highest notch position of the train control handle; calculating a first notch position of the train control handle required for the train operation according to the first traction force; and
    distributing the first traction force to 1 of the traction units when the first notch position falls into the first notch interval; distributing the first traction force to 2 of the traction units when the first notch position falls into the second notch interval; ...; and distributing the first traction force to N of the traction units when the first notch position falls into the N-th notch interval.

5.  The control method for the train with the variable motor-to-trailer ratio according to claim 1, wherein a step of calculating a first traction force required for train operation comprises steps of:

    determining a section segment where the train is located, road condition information of the section segment, a running direction, and a running speed according to line information of the train operation and position information of the train;
    determining an actual weight of the train according to the passenger load and a self-weight of the train;
    determining a current adhesion coefficient according to the train running speed, the weather state, and the rail surface state; and
    calculating a traction force required for operation of the train in a current section segment or a traction force required for operation of the train in a next section segment according to the road condition information of the section segment where the train is located, the running direction, the actual weight, and the adhesion coefficient.

6. The control method for the train with the variable motor-to-trailer ratio according to claim 1, wherein all carriages of the train are provided with traction control units and traction units, or the train comprises motor carriages and trailer carriages, and each of the motor carriages is provided with a traction control unit and a traction unit.

7. The control method for the train with the variable motor-to-trailer ratio according to claim 1, further comprising a step of: determining whether the train is in a switchable environment in response to the accumulated working duration of the traction unit currently providing the traction force being greater than the first duration threshold, wherein the switchable environment is a downhill rail section segment or a straight rail section segment.

8. The control method for the train with the variable motor-to-trailer ratio according to claim 1, further comprising a step of: acquiring the operation information of the train in real time; calculating a second traction force required for the train operation according to the operation information; and
determining whether an absolute value of a difference between the second traction force and the first traction force exceeds a second error threshold; replacing the first traction force with the second traction force in response to the absolute value of the difference between the second traction force and the first traction force being greater than the second error threshold, and then distributing the first traction force unevenly to the each traction unit.

9. An onboard controller, comprising a memory, a processor, and a computer program stored in the memory and executable on the processor, wherein when the processor executes the computer program, the control method for the train with the variable motor-to-trailer ratio according to any one of claims 1 to 8 is implemented.

10. A rail train, comprising the onboard controller according to claim 9.

**FIG. 1**

| | |
|---|---|
| acquiring operation information of train, calculating first traction force required for train operation according to operation information | S01 |
| distributing first traction force unevenly to each traction unit, wherein at least one traction unit does not provide traction force | S02 |
| acquiring accumulated working duration of each traction unit currently providing traction force | S03 |
| whether working duration is greater than first duration threshold | S04 |

No

Yes

| | |
|---|---|
| shutting down traction, resetting working duration of traction unit to zero, and starting another traction unit not currently providing traction force | S05 |
| acquiring operation information of train in real time, calculating second traction force required for train operation according to operation information | S06 |
| whether absolute value of difference between second traction force and first traction force exceeds second error threshold | S07 |

Yes

No

replacing first traction force with second traction force

**FIG. 2**

30% → TCU1 ⟋ 8

0% → TCU2 ⟋ 9

30% → TCU3 ⟋ 10

100% →

0% → TCU4 ⟋ 11

0% → TCU5 ⟋ 12

40% → TCU6 ⟋ 13

**FIG. 3**

25% → TCU1 ⟋ 8

0% → TCU2 ⟋ 9

25% → TCU3 ⟋ 10

100% →

25% → TCU4 ⟋ 11

0% → TCU5 ⟋ 12

25% → TCU6 ⟋ 13

**FIG. 4**

14

50% → TCU1 ⟋ 8

0% → TCU2 ⟋ 9

100% →

50% → TCU3 ⟋ 10

0% → TCU4 ⟋ 11

**FIG. 5**

acquiring operation information of train, calculating first traction force required for train operation according to operation information — S01

↓

distributing first traction force unevenly to each traction unit, wherein at least one traction unit does not provide traction force — S02

↓

acquiring accumulated working duration of each traction unit currently providing traction force — S03

↓

whether working duration is greater than first duration threshold — S04 — No

↓ Yes

whether traction unit is in a switchable environment — S08 — No

↓ Yes

shutting down traction, resetting working duration of traction unit to zero, and starting another traction unit not currently providing traction force — S05

↓

acquiring operation information of train in real time, calculating second traction force required for train operation according to operation information — S06

↓

whether absolute value of difference between second traction force and first traction force exceeds second error threshold — S07 — Yes → replacing first traction force with second traction force

↓ No

**FIG. 6**

## INTERNATIONAL SEARCH REPORT

| International application No. |
|---|
| **PCT/CN2023/133342** |

| A. | CLASSIFICATION OF SUBJECT MATTER |
|---|---|

B61C 15/14(2006.01)i

According to International Patent Classification (IPC) or to both national classification and IPC

| B. | FIELDS SEARCHED |
|---|---|

Minimum documentation searched (classification system followed by classification symbols)

IPC: B61

Documentation searched other than minimum documentation to the extent that such documents are included in the fields searched

Electronic data base consulted during the international search (name of data base and, where practicable, search terms used)

CNKI, CNTXT, VEN: 变动拖比, 控制, 牵引力, 非均匀, 时长, 时间, 阈值; control+, traction, uneven+, time, threshold

| C. | DOCUMENTS CONSIDERED TO BE RELEVANT |
|---|---|

| Category* | Citation of document, with indication, where appropriate, of the relevant passages | Relevant to claim No. |
|---|---|---|
| A | CN 112249043 A (ZHUZHOU CRRC TIMES ELECTRIC CO., LTD.) 22 January 2021 (2021-01-22) description, pages 5-15, and figures 1-4 | 1-10 |
| A | CN 115892077 A (ZHUZHOU CRRC TIMES ELECTRIC CO., LTD.) 04 April 2023 (2023-04-04) entire document | 1-10 |
| A | CN 112109750 A (ZHUZHOU CRRC TIMES ELECTRIC CO., LTD.) 22 December 2020 (2020-12-22) entire document | 1-10 |
| A | CN 114228790 A (CRRC ZHUZHOU INSTITUTE CO., LTD.) 25 March 2022 (2022-03-25) entire document | 1-10 |
| A | CN 113665596 A (CRRC NANJING PUZHEN CO., LTD.) 19 November 2021 (2021-11-19) entire document | 1-10 |
| A | US 2013035811 A1 (SCHROECK BRIAN et al.) 07 February 2013 (2013-02-07) entire document | 1-10 |

☐ Further documents are listed in the continuation of Box C.    ☑ See patent family annex.

| * | Special categories of cited documents: |
|---|---|
| "A" | document defining the general state of the art which is not considered to be of particular relevance |
| "D" | document cited by the applicant in the international application |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| "T" | later document published after the international filing date or priority date and not in conflict with the application but cited to understand the principle or theory underlying the invention |
|---|---|
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
|---|---|
| **22 May 2024** | **09 June 2024** |

| Name and mailing address of the ISA/CN | Authorized officer |
|---|---|
| **China National Intellectual Property Administration (ISA/CN)** **China No. 6, Xitucheng Road, Jimenqiao, Haidian District, Beijing 100088** | |
| | Telephone No. |

Form PCT/ISA/210 (second sheet) (July 2022)

**INTERNATIONAL SEARCH REPORT**
Information on patent family members

International application No.

**PCT/CN2023/133342**

| Patent document cited in search report | | | Publication date (day/month/year) | Patent family member(s) | | | Publication date (day/month/year) |
|---|---|---|---|---|---|---|---|
| CN | 112249043 | A | 22 January 2021 | None | | | |
| CN | 115892077 | A | 04 April 2023 | None | | | |
| CN | 112109750 | A | 22 December 2020 | None | | | |
| CN | 114228790 | A | 25 March 2022 | None | | | |
| CN | 113665596 | A | 19 November 2021 | None | | | |
| US | 2013035811 | A1 | 07 February 2013 | US | 8768544 | B2 | 01 July 2014 |

Form PCT/ISA/210 (patent family annex) (July 2022)

**EP 4 682 010 A1**

**REFERENCES CITED IN THE DESCRIPTION**

**Patent documents cited in the description**

- CN 202311371483